# EUROPEAN PATENT APPLICATION

(11) **EP 2 204 977 A1**
(43) Date of publication of application: **07.07.2010**
(21) Application number: 09180775.0
(22) Date of filing: 24.12.2009
(51) Int. Cl.: H04N 1/00, G06F 3/048, G06F 9/44

(54) **An apparatus, method and computer program for indicating to a user that a contact has uploaded data to a remote server**

(30) Priority: 31.12.2008 IN CH33462008
(71) Applicant: Nokia Corporation, 02150 Espoo (FI)
(72) Inventor: Bhojani, Bhavesh, 560016 Bangalore (IN); Subramaniam, Narayan Venkata, Kadabeesanaha 560 087 Bangalore (IN); Veteläinen, Altti, 90230 Oulu (FI); Lehto, Sonja, Tampere (FI)
(74) Representative: Thould, Lee Matthew

(57) **Abstract**

A method comprising: displaying a widget having an area; receiving contemporaneous update information indicative that a contact of the user has uploaded data to a remote server; and automatically displaying an item, associated with the contact, in the area of the displayed widget using the received contemporaneous update information.

## Description

### FIELD OF THE INVENTION

Embodiments of the present invention relate to an apparatus, method and computer program. In particular, they relate to an apparatus, method and computer program in a mobile cellular telephone.

### BACKGROUND TO THE INVENTION

Apparatus, such as mobile cellular telephones, may enable a user to upload and download data to and from a remote server via a network. Users of such apparatus may share data with one another that they have uploaded to the remote server. However, users may be unaware of when their contacts (for example, friends, relatives and colleagues) have uploaded data to the remote server and may consequently not download the data.

It would therefore be desirable to provide an alternative apparatus.

### BRIEF DESCRIPTION OF VARIOUS EMBODIMENTS OF THE INVENTION

According to various, but not necessarily all, embodiments of the invention there is provided a method comprising: displaying a widget having an area; receiving contemporaneous update information indicative that a contact has uploaded data; and automatically displaying an item, associated with the contact, in the area of the displayed widget using the received contemporaneous update information.

The item may be automatically displayed in response to the received contemporaneous update information.

The method may further comprise periodically determining whether contemporaneous update information has been received and automatically displaying the item if contemporaneous update information has been received.

The method may further comprise requesting contact information for a plurality of contacts in response to at least a portion of the widget being selected by a user.

The method may further comprise requesting the uploaded data in response to the item being selected by a user.

The method may further comprise removing a displayed item from the area of the widget if the received contemporaneous update information, associated with the displayed item, was received at a time outside of a predetermined threshold period of time.

The method may further comprise configuring the widget to include zero, one or a plurality of items in the area.

The method may further comprise displaying one or more other widgets adjacent the widget, the one or more other widgets being configured to provide different functions to the widget.

The uploaded data may be uploaded to a remote server.

The uploaded data may be uploaded image data.

The item displayed in the area of the widget may be an image associated with the contact.

According to various, but not necessarily all, embodiments of the invention there is provided an apparatus comprising: a processor configured to control a display to display a widget having an area; receive contemporaneous update information indicative that a contact has uploaded data; and automatically control the display to display an item, associated with the contact, in the area of the displayed widget using the received contemporaneous update information.

The apparatus may be for wireless communication.

The item may be automatically displayed in response to the received contemporaneous update information.

The processor may be configured to periodically determine whether contemporaneous update information has been received and to automatically control the display to display the item if contemporaneous update information has been received.

The processor may be configured to request contact information for a plurality of contacts in response to at least a portion of the widget being selected by a user.

The processor may be configured to request the uploaded data in response to the item being selected by a user.

The processor may be configured to control the display to remove a displayed item from the area of the widget if the received contemporaneous update information, associated with the displayed item, was received at a time outside of a predetermined threshold period of time.

The processor may be configured to control the display to configure the widget to include zero, one or a plurality of items in the area.

The processor may be configured to control the display to display one or more other widgets adjacent the widget, the one or more other widgets being configured to provide different functions to the widget.

The uploaded data may be uploaded to a remote server.

The uploaded data may be uploaded image data.

The item displayed in the area of the widget may be an image associated with the contact.

According to various, but not necessarily all, embodiments of the invention there is provided a computer readable storage medium encoded with instructions that, when executed by a processor, perform: displaying a widget having an area; receiving contemporaneous update information indicative that a contact has uploaded data; and automatically displaying an item, associated with the contact, in the area of the displayed widget using the received contemporaneous update information.

The computer readable storage medium may be encoded with instructions that, when executed by a processor, further perform: requesting contact information for a plurality of contacts in response to at least a portion of the widget being selected by a user.

The computer readable storage medium may be encoded with instructions that, when executed by a processor, further perform: requesting the uploaded data in response to the item being selected by a user.

The computer readable storage medium may be encoded with instructions that, when executed by a processor, further perform: removing a displayed item from the area of the widget if the received contemporaneous update information, associated with the displayed item, was received at a time outside of a predetermined threshold period of time.

According to various, but not necessarily all, embodiments of the invention there is provided a computer program that, when run on a computer, performs: displaying a widget having an area; receiving contemporaneous update information indicative that a contact has uploaded data; and automatically displaying an item, associated with the contact, in the area of the displayed widget using the received contemporaneous update information.

The computer program, when run on a computer, may further perform: requesting contact information for a plurality of contacts in response to at least a portion of the widget being selected by a user.

The computer program, when run on a computer, may further perform: requesting the uploaded data in response to the item being selected by a user.

The computer program, when run on a computer, may further perform: removing a displayed item from the area of the widget if the received contemporaneous update information, associated with the displayed item, was received at a time outside of a predetermined threshold period of time.

According to various, but not necessarily all, embodiments of the invention there is provided a computer program that, when run on a computer performs a method as described in any of the preceding paragraphs.

According to various, but not necessarily all, embodiments of the invention there is provided an apparatus comprising: means for displaying a widget having an area; means for receiving contemporaneous update information indicative that a contact has uploaded data; and means for automatically displaying an item, associated with the contact, in the area of the displayed widget using the received contemporaneous update information.

### BRIEF DESCRIPTION OF THE DRAWINGS

For a better understanding of various examples of embodiments of the present invention reference will now be made by way of example only to the accompanying drawings in which:
Fig. 1 illustrates a schematic diagram of a system according to various embodiments of the present invention;
Fig. 2A illustrates a schematic diagram of a widget according to various embodiments of the present invention;
Fig. 2B illustrates a schematic diagram of the widget illustrated in fig. 2A with an additional item associated with a contact who has recently uploaded data;
Fig. 3 illustrates a flow diagram of a method according to various embodiments of the present invention; and
Fig. 4 illustrates a flow diagram of a method according to various embodiments of the present invention.

### DETAILED DESCRIPTION OF VARIOUS EMBODIMENTS OF THE INVENTION

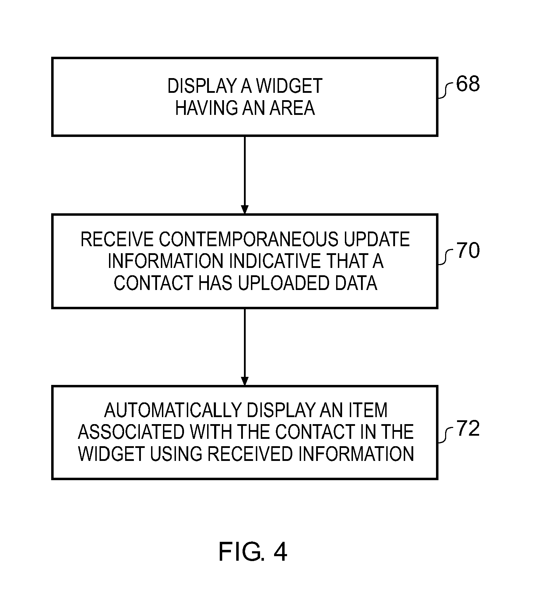

Figure 4 illustrates a method comprising: displaying a widget 52 having an area 54; receiving contemporaneous update information indicative that a contact has uploaded data; and automatically displaying an item 56, associated with the contact, in the area 54 of the displayed widget 52 using the received contemporaneous update information.

In the following description, the wording 'connect' and 'couple' and their derivatives mean operationally connected/coupled. It should be appreciated that any number or combination of intervening components can exist (including no intervening components).

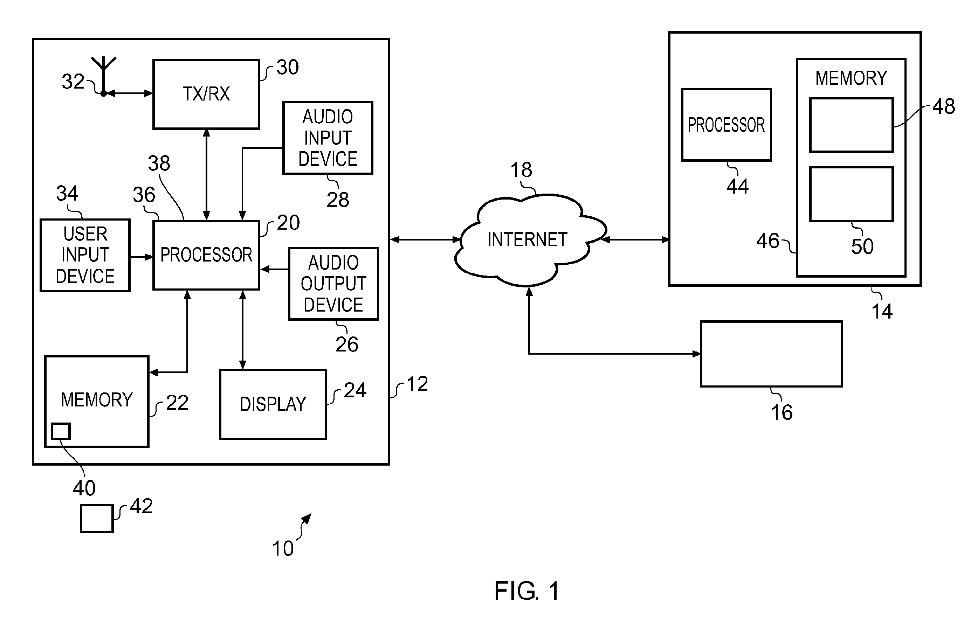

Figure 1 illustrates a schematic diagram of a system 10 including a first apparatus 12, a server 14 and a second apparatus 16 which are connected to one another via a network 18 such as the internet. The first apparatus 12, the server 14 and the second apparatus 16 are configured to be able to communicate with one via the network 18 and thereby exchange data between one another. The first apparatus 12, the server 14 and the second apparatus 16 may be connected to the network 18 via a wired link or via a wireless link.

The first apparatus 12 includes a processor 20, a memory 22, a display 24, an audio output device 26, an audio input device 28, a transceiver 30, an antenna arrangement 32 and a user input device 34.

The first apparatus 12 may be any portable apparatus and may be, for example, a mobile cellular telephone, a personal digital assistant (PDA), a palmtop computer or a laptop computer. It should be appreciated that at least some of the above features may or may not be included in other apparatus according to embodiments of the present invention.

The processor 20 may be any suitable processor and may be a microprocessor for example. The implementation of the processor 20 can be in hardware alone (for example, a circuit), have certain aspects in software including firmware alone or can be a combination of hardware and software (including firmware).

The processor 20 may be implemented using instructions that enable hardware functionality, for example, by using executable computer program instructions in a general-purpose or special-purpose processor that may be stored on a computer readable storage medium (disk, memory etc) to be executed by such a processor.

The processor 20 is configured to read from and write to the memory 22. The processor 20 may also comprise an output interface 36 via which data and/or commands are output by the processor 20 and an input interface 38 via which data and/or commands are input to the processor 20.

The memory 22 may be any suitable memory and may, for example be permanent built-in memory such as flash memory or it may be a removable memory such as a hard disk, secure digital (SD) card or a micro-drive. The memory 22 stores a computer program 40 comprising computer program instructions that control the operation of the first apparatus 12 when loaded into the processor 20. The computer program instructions 40 provide the logic and routines that enables the first apparatus 12 to perform the method illustrated in Fig. 4. The processor 20 by reading the memory 22 is able to load and execute the computer program 40.

The computer program instructions 40 provide: computer readable program means for displaying a widget having an area; computer readable program means for receiving contemporaneous update information indicative that a contact has uploaded data; and computer readable program means for automatically displaying an item, associated with the contact, in the area of the displayed widget using the received contemporaneous update information.

The computer program 40 may arrive at the first apparatus 12 via any suitable delivery mechanism 42. The delivery mechanism 42 may be, for example, a computer-readable storage medium, a computer program product, a memory device, a record medium such as a Blue-ray disc, CD-ROM, DVD or an article of manufacture that tangibly embodies the computer program 40. The delivery mechanism may be a signal configured to reliably transfer the computer program 40. The first apparatus 12 may propagate or transmit the computer program 40 as a computer data signal.

Although the memory 22 is illustrated as a single component it may be implemented as one or more separate components some or all of which may be integrated/removable and/or may provide permanent/semi-permanent/dynamic/cached storage.

References to 'computer-readable storage medium', 'computer program product', 'tangibly embodied computer program' etc. or a 'controller', 'computer', 'processor' etc. should be understood to encompass not only computers having different architectures such as single/multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The display 24 is configured to receive and display data from the processor 20. The processor 20 may read data from the memory 22 and provide it to the display 24 for display to a user of the first apparatus 12. The display 24 may be any suitable display and may be, for example, a thin film transistor (TFT) display, a liquid crystal display (LCD) or a light emitting diode (LED) display (for example, an organic light emitting diode (OLED) display).

The display 24 may be a touch screen display and include one or more sensors (not illustrated) for sensing the application of force by a user and for providing a control signal to the processor 20. The processor 20 may be configured to control the display 24 using control signals received from the one or more sensors.

The processor 20 is configured to provide audio data to the audio output device 26. The audio output device 26 is configured to convert the audio data into acoustic waves, audible to the user of the first apparatus 12. The audio output device 26 may be a loud speaker for example.

The audio input device 28 is configured to convert acoustic waves (a voice of a user for example) into an electrical signal for input to the processor 20. The audio input device 28 may be a microphone for example.

The transceiver 30 is connected to the antenna arrangement 32 and to the processor 20. The processor 20 is configured to provide data to the transceiver 30. The transceiver 30 is configured to encode the data and provide it to the antenna arrangement 32 for transmission. The antenna arrangement 32 is configured to transmit the encoded data as a radio signal. The antenna arrangement 32 is also configured to receive a radio signal. The transceiver 30 receives the radio signal from the antenna arrangement 32 and decodes the radio signal into data. The radio signal may have a frequency within a licensed cellular frequency band (for example, within a Global System for Mobile communications (GSM) frequency band (for example, 900 MHz)).

The user input device 34 (which may for example include one or more keys) may be operable by a user to provide control signals to the processor 20. The user input device 34 may enable a user to control all aspects of a graphical user interface displayed on the first apparatus 12 or may (where the display 24 is a touch screen display) be used to supplement the control provided by the touch screen display 24.

The server 14 includes a processor 44 and a memory 46. The processor 44 and the memory 46 may be similar to the processor 20 and the memory 22 respectively and will consequently not be discussed in any greater detail.

The second apparatus 16 may be any suitable portable apparatus and may have a similar structure to the first apparatus 12. Consequently, the second apparatus 16 will not be discussed in any greater detail.

The memory 46 of the server 14 stores a plurality of profiles, including a profile 48 for a user of the first apparatus 12 and a profile 50 for a user of the second apparatus 16. Each profile may include information that is relatively personal to the user associated with the profile. For example, a profile may include image data (for example, digital photographs and digital videos), audio data (for example, samples of the user's favorite songs) and data which includes contact information for each of that user's contacts (for example, names, addresses, telephone numbers and e-mail addresses of the user's friends, relatives and colleagues).

The users of the first apparatus 12 and the second apparatus 16 are able to upload data to the server 14 using their respective apparatus 12, 16. For example, the user of the second apparatus 16 may upload image data (a photograph for example) to his profile 50 stored on the memory 46 using the second apparatus 16.

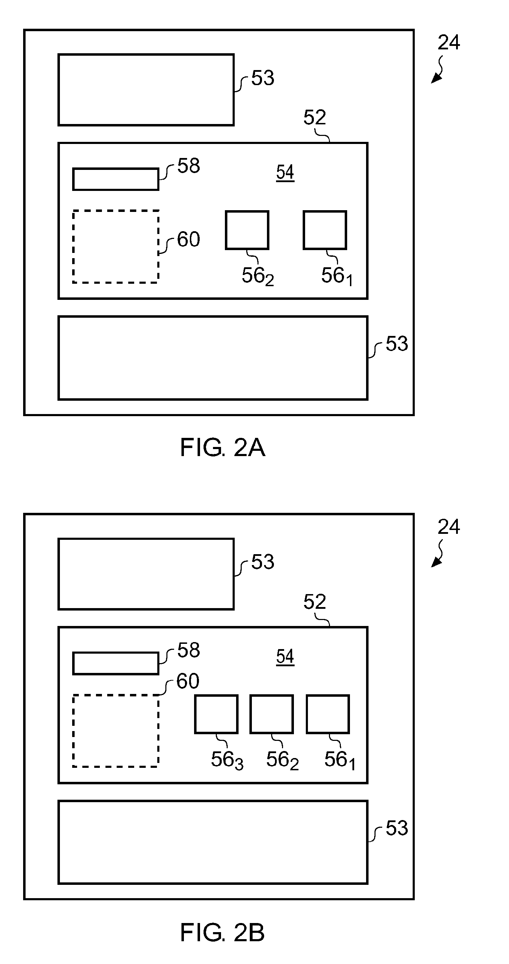

With reference to fig. 2A, the processor 20 is configured to control the display 24 to display a widget 52 having an area 54 and including items 56, an indicator 58 and a selectable portion 60 within the area 54. The widget 52 is a portion of a graphical user interface (GUI) that enables the user of the first apparatus 12 to view which of his contacts (as stored in the profile 48) have recently uploaded data to their profiles stored on the memory 46 of the server 14. The widget 52 may be displayed while the first apparatus 12 is in an idle mode (this is a mode in which the first apparatus 12 has not received an input from the user since a predetermined time before the present) and may also be displayed while the user is providing inputs to the first apparatus 12. The widget 52 automatically updates, whether in idle mode or not, to show which of the user's contacts have uploaded data (image data for example) to their profiles on the server 14.

The processor 20 is also configured to control the display 24 to display one or more other widgets 53 which are configured to provide different functions to the widget 52. For example, the one or more other widgets 53 may enable a user to view and edit image data, video data and/or text data which he has uploaded to his profile 48 on the server 14.

The widget 52 is configurable to include zero, one or a plurality of items 56₁, 56₂ which are associated with contacts of the user (i.e. friends, relatives, and colleagues of the user). An item 56 is indicative that the contact associated with that item has recently uploaded data to the memory 46 of the server 14. The items 56 may include images of their associated contact (for example, a thumbnail portrait photograph of that contact) or may include images which are associated with the contacts (for example, the contact may be represented by an image of some scenery).

The user of the first apparatus 12 may control the user input device 34 and/or the touch screen display 24 to select one of the items 56₁, 56₂. In response to the selection, the processor 20 sends a request to the server 14 for a copy of the uploaded data. In response to the request, the processor 44 of the server 14 accesses the memory 46 and transmits a copy of the uploaded data to the first apparatus 12. Upon receipt of the copy of the uploaded data, the processor 20 controls the display 24 to display the uploaded data (a digital photograph for example). It should be appreciated that in some embodiments, the server 14 may transmit to the first apparatus 12 a copy of at least a portion of the selected contacts profile which includes a link to the uploaded data.

The indicator 58 is configured to indicate that the user's contacts have recently uploaded data to the server 14. For example, if a user's contacts have uploaded digital photographs to their profiles, the indicator 58 may include the text "New Photos". In operation, the processor 20 may determine whether any items 56 are displayed in the area 54 of the widget 52. If the processor 20 determines that items 56 are displayed in the widget 52, then the processor 20 controls the display 24 to display the indicator 58 in the widget 52. If the processor 20 determines that there are no items displayed in the widget 52, then the indicator 58 is not displayed in the widget 52.

The user of the first apparatus 12 may control the user input device 34 and/or the touch screen display 24 to select the selectable portion 60. In response to the selection of the portion 60, the processor 20 sends a request to the server 14 for contact information for a plurality of contacts (stored in the user's profile). In response to the request, the processor 44 of the server 14 accesses the memory 46 and transmits contact information for the plurality of contacts to the first apparatus 12. Upon receipt of the contact information, the processor 20 controls the display 24 to display the contact information for the plurality of contacts (for example, the display 24 may display a plurality of thumbnail digital photographs that provide a link to detailed contact information).

The selectable portion 60 of the widget 52 may be a portion of the area 54 of the widget 52 or be substantially all of the area 54 of the widget 52. The selectable portion 60 may include an image and/or text which indicates the presence of the selectable portion 60 to the user.

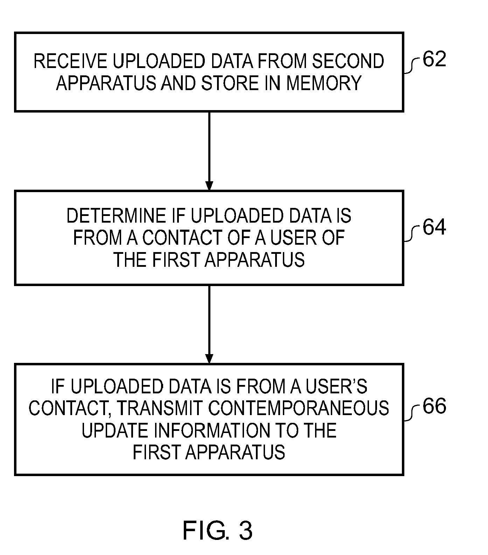

A method of uploading data to the server 14 and of updating the widget 52 according to various embodiments of the present invention will now be described with reference to figures 3 and 4.

With reference to fig. 3, at block 62 the processor 44 of the server 14 receives uploaded data from the second apparatus 16 and stores the uploaded data in the profile 50 in the memory 46. In this embodiment, the uploaded data is uploaded image data. However, in other embodiments the uploaded data may be uploaded text data or uploaded audio data.

At block 64, the processor 44 determines whether the uploaded image data is from a contact of the user of the first apparatus 12. For example, the processor 44 may review the profile 50 of the user of the second apparatus 16 and determine that since the contact information of the user of the first apparatus 12 is stored in the profile 50, that the user of the second apparatus 16 is a contact of the user of the first apparatus 12.

If the processor 44 determines that the user of the second apparatus 16 is a contact of the user of the first apparatus 12, the server 14 transmits contemporaneous update information to the first apparatus 12 that is indicative that the user of the second apparatus 16 has uploaded image data to the server 14. The update information transmitted by the server 14 to the first apparatus 12 is contemporaneous with the reception of the uploaded image data from the second apparatus 16.

With reference to fig. 4, at block 68 the processor 20 controls the display 24 to display the widget 52. At block 70, the processor 20 receives the contemporaneous update information which is indicative that the user of the second apparatus 16 has uploaded image data to the server 14. At block 72, the processor 20 automatically controls the display 24 to display an item 56₃ (please see fig. 2B which illustrates the widget 52 including the new item 56₃) that is associated with the user of the second apparatus 16 (who is a contact of the user of the first apparatus 12) using the received contemporaneous information.

It should be appreciated that the use of the word 'automatically' means that the processor 20 does not require any input from the user of the first apparatus 12 in order to display the item 56₃ in the widget 52. Consequently, the processor 20 is able to control the display 24 to display the item 56₃ when the first apparatus 12 is in an idle mode and has not received any input from the user.

In various embodiments, the processor 20 may automatically control the display 24 to display the item 56₃ in response to receiving the contemporaneous update information. In other embodiments, the processor 20 may periodically determine whether contemporaneous update information has been received and if update information has been received, the processor 20 automatically controls the display 24 to display the item 56₃.

In order to prevent items 56 from remaining on the widget 52 for too long, the processor 20 may periodically determine whether the received contemporaneous update information, associated with a displayed item, was received over a predetermined time ago (for example, it may determine whether the received update information was received over one week ago). If the received update information is determined to have been received over a predetermined time ago, the processor 20 controls the display 24 to remove the item 56 from the area 54 of the widget 52. Additionally or alternatively, the widget 52 may only include a maximum number of items 56 (three for example) and the processor 20 may control the display 24 to replace the oldest item 56 with a new item 56.

Embodiments of the present invention may provide several advantages. One such advantage is that the widget 52 may allow the user of the first apparatus 12 to determine whether or not his contacts have recently uploaded data onto the server 14. Since the widget 52 may be updated while the first apparatus 12 is in an idle mode, the user does not need to interact with the first apparatus 12 (for example, by providing an input to the first apparatus 12) to determine whether a contact has updated their profile (for example, with new photographs) on the server 14. This may result in the user being able to more discreetly check whether a contact has updated their profile and may also result in the first apparatus 12 being easier to operate.

The blocks illustrated in the Figs 3 and 4 may represent steps in a method and/or sections of code in the computer program 40. The illustration of a particular order to the blocks does not necessarily imply that there is a required or preferred order for the blocks and the order and arrangement of the block may be varied. Furthermore, it may be possible for some steps to be omitted.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method comprising:
displaying a widget having an area;
receiving contemporaneous update information indicative that a contact has uploaded data; and
automatically displaying an item, associated with the contact, in the area of the displayed widget using the received contemporaneous update information.

2. A method as claimed in claim 1, wherein the item is automatically displayed in response to the received contemporaneous update information or wherein the method further comprises periodically determining whether contemporaneous update information has been received and automatically displaying the item if contemporaneous update information has been received.

3. A method as claimed in claim 1 or 2, further comprising requesting contact information for a plurality of contacts in response to at least a portion of the widget being selected by a user.

4. A method as claimed in any of the preceding claims, further comprising requesting the uploaded data in response to the item being selected by a user.

5. A method as claimed in any of the preceding claims, further comprising removing a displayed item from the area of the widget if the received contemporaneous update information, associated with the displayed item, was received at a time outside of a predetermined threshold period of time.

6. A method as claimed in any of the preceding claims, further comprising configuring the widget to include zero, one or a plurality of items in the area.

7. A method as claimed in any of the preceding claims, further comprising displaying one or more other widgets adjacent the widget, the one or more other widgets being configured to provide different functions to the widget.

8. A method as claimed in any of the preceding claims, wherein the uploaded data is uploaded to a remote server.

9. A method as claimed in any of the preceding claims, wherein the uploaded data is uploaded image data.

10. A method as claimed in any of the preceding claims, wherein the item displayed in the area of the widget is an image associated with the contact.

11. An apparatus comprising:
a processor configured to control a display to display a widget having an area; receive contemporaneous update information indicative that a contact has uploaded data; and automatically control the display to display an item, associated with the contact, in the area of the displayed widget using the received contemporaneous update information.

12. An apparatus as claimed in claim 11, wherein the item is automatically displayed in response to the received contemporaneous update information or wherein the processor is configured to periodically determine whether contemporaneous update information has been received and to automatically control the display to display the item if contemporaneous update information has been received.

13. An apparatus as claimed in claim 11 or 12, wherein the processor is configured to request contact information for a plurality of contacts in response to at least a portion of the widget being selected by a user.

14. An apparatus as claimed in any of claims 11 to 13, wherein the processor is configured to control the display to remove a displayed item from the area of the widget if the received contemporaneous update information, associated with the displayed item, was received at a time outside of a predetermined threshold period of time.

15. A computer program that, when run on a computer performs the method of any of claims 1 to 10.
